# EUROPEAN PATENT APPLICATION

(11) **EP 3 331 240 A1**
(43) Date of publication of application: **06.06.2018**
(21) Application number: 16306607.9
(22) Date of filing: 02.12.2016
(51) Int. Cl.: H04N 7/15

(54) **METHOD AND DEVICE FOR SETTING UP A VIRTUAL MEETING SCENE**

(71) Applicant: Thomson Licensing, 92130 Issy-les-Moulineaux (FR)
(72) Inventor: Loeffler, Siegfried, 92130 Issy-les-Moulineaux, FR (FR)
(74) Representative: Huchet, Anne

(57) **Abstract**

The present invention relates to a method for setting up a virtual meeting scene in which real participants are represented by respective avatars in real time, comprising:
- receiving (S1) information on said real participants, and
- adjusting (S2) geometrical properties and a positioning of at least one object of said virtual meeting scene in function of at least a number of said real participants and at least one rule regarding an arrangement of said avatars in said virtual meeting scene.

## Description

### 1. TECHNICAL FIELD

The present invention relates generally to the field of the organization of virtual meetings. More specifically, the present invention relates to a method and a device for setting up a virtual meeting scene in which real participants are represented by respective avatars in real time.

### 2. BACKGROUND ART

Solutions for organizing meetings exist both in professional telecommunications (requiring dedicated videoconferencing / telepresence rooms) and in residential telecommunications (typically based on webcams or devices embedding webcams).

Solutions have been described to make it is possible to represent faces of participants to virtual meetings simulated by the use of avatars as disclosed in the application US 2012/0192088 A1. The documents EP 2 352 290 B1 and US 7,346,654 B1 also describe solutions for simulating audio-visual locations of participants in such environments, by processing the audio information from each participant in attenuating and spatializing the audio signal corresponding to each individual location in the room.

The article by H. Nakanishi, "FreeWalk: a social interaction platform for group behaviour in a virtual space", International Journal of Human-Computer Studies, vol.60, no.4, pp. 421-454, Academic Press, April 2004, describes how a group of people can be simulated in a virtual meeting space. More precisely, people can move around and binaural sound audio spatialization combined with motion tracking can be used, to generate a simulated sound from the perspective of a given virtual meeting participant.

The article by M. Billinghurstet al. "A wearable spatial conferencing space", Second International Symposium on Wearable Computers (Cat. No.98EX215), Digest of Papers, Nov. 1998, describes how to use a wearable device to give a virtual reality simulation of the spatialized audio/video of meeting participants.

While these solutions describe how to transpose the participants of virtual meetings, none of these existing solutions addresses how the actual setting of the virtual meeting room environment should be handled, nor how to deal with participants entering or leaving the room.

Given the particular importance of optimizing the signal-to-noise ratio in such meetings, or at least of making it as large as possible, it is however often essential to optimize the venue for virtual meetings in a way that all participants get the best possible transmission of the audio information.

In addition, enabling a good cross-perception of participants is also important, which currently leads to either dedicated operations by the participants or an organizer for e.g. room selection or avatar positioning, or to dynamic displacements of avatars in the virtual meeting place. Accordingly, existing solutions appear demanding in audio and/or video adjustments, further to potentially tedious and disturbing manual actions. This entails in particular encoding overheads for audio/video signals.

### 3. SUMMARY OF INVENTION

It is an object of the present invention to solve at least one the above mentioned issues.

According to the disclosure, the object is solved by a method for setting up a virtual meeting scene in which real participants are represented by respective avatars in real time, comprising:
- receiving information on said real participants, and
- adjusting geometrical properties and a positioning of at least one object of said virtual meeting scene in function of at least a number of said real participants and at least one rule regarding an arrangement of said avatars in said virtual meeting scene.

In existing solutions, the avatars can move inside the virtual meeting scene, or their positioning is arranged by themselves or organizers, or the sound is amplified when some people are speaking. This entails additional telecommunication bandwidth for participant displacements, and dedicated audio and/or video processing costs for correct communications.

The disclosure solves those issues by automatically adapting the virtual meeting conditions so that communications between participants are advantageously good according to predefined criteria. This can concern vision as well as sound. Surprisingly, this relies at least in part on modifying geometric properties of objects themselves in the virtual scene which usually does not happen in the real world.

The adjustment of the geometrical properties and the positioning of objects of said virtual meeting scene enables to optimize, or at least significantly enhance, the meeting experience of the participants.

Advantageously, the method further comprises a step of adjusting a number of said at least one object in said virtual meeting scene in function of said at least a number of said real participants and said at least one rule regarding an arrangement of said avatars in said virtual meeting scene.

In some embodiments, the real participants are able to attend at least one meeting at least visually in positions of said respective avatars in said virtual meeting scene. In these embodiments, said at least one rule includes respective visibility properties of said avatars with respect to each other or with respect to a virtual visual source.

In particular embodiments, said at least one rule includes a visibility of each of said avatars by all others of said avatars.

In particular embodiments, said at least one rule includes a visibility of each of said avatars by a partition of all others of said avatars, said partition being defined as a function of user profiles associated to said avatars.

In particular embodiments, said avatars are ranked according to a hierarchy and said at least one rule includes a visibility of each of said avatars being at a rank of said hierarchy by any of said avatars being at a higher rank of said hierarchy.

In particular embodiments, the real participants are able to attend at least one meeting at least in an auditory way in positions of said respective avatars in said virtual meeting scene. In these embodiments, said at least one rule includes respective hearing properties of said avatars with respect to each other or with respect to a virtual sound source.

In particular embodiments, said at least one rule includes the capability of each of said avatars to hear all others of said avatars or a partition of the latter.

In particular embodiments, said at least one object of the virtual meeting scene depends on a category of the meeting (cocktail, reception, work meeting, training meeting).

In particular embodiments, said virtual meeting scene includes at least two meeting places and said at least one rule includes a maximum number of said avatars at at least one of said meeting places.

In particular embodiments, said at least one rule includes a maximum distance between said avatars.

In particular embodiments, the steps of receiving information on said real participants, adjusting the geometrical properties and the positioning of said at least one object and, where appropriate, adjusting the number of said at least one object are effected before a meeting starts

In other embodiments, the steps of receiving information on said real participants, adjusting the geometrical properties and the positioning of said at least one object and, where appropriate, adjusting the number of said at least one object are dynamically effected during a meeting.

In particular embodiments, the step of receiving information on said real participants comprises receiving information on the participants arriving and leaving during said meeting.

In particular embodiments, said at least one object comprises at least one table and said geometrical properties include a size or a shape of said table.

In particular embodiments, said at least one object comprises walls and said geometrical properties include at least one spacing between said walls.

In particular embodiments, said at least one object comprises seats and said geometrical properties include heights of said seats.

In particular embodiments, the method further comprises a step of adding or removing at least one of said at least one object in said virtual meeting scene in function of at least said number of said real participants.

The disclosure also relates to a method for setting up a virtual meeting scene in which real participants are represented by respective avatars in real time, comprising:
- receiving information on said real participants at at least one input, and
- adjusting, by at least one processor, geometrical properties and a positioning of at least one object of said virtual meeting scene in function of at least a number of said real participants and at least one rule regarding an arrangement of said avatars in said virtual meeting scene, and
- outputting image data and sound data at at least one output for representing said virtual meeting scene and emitting corresponding sounds to said real participants.

The disclosure also relates to an apparatus for setting up a virtual meeting scene in which real participants are represented by respective avatars in real time, comprising:
- an input for receiving information on said real participants, and
- an adjusting unit for adjusting geometrical properties and a positioning of at least one object of said virtual meeting scene in function of at least a number of said real participants and at least one rule regarding an arrangement of said avatars in said virtual meeting scene.

Advantageously, the adjusting unit is further configured to adjust a number of said at least one object in said virtual meeting scene in function of said at least a number of said real participants and said at least one rule regarding an arrangement of said avatars in said virtual meeting scene.

The apparatus is advantageously adapted to carrying out a method as disclosed, according to any of its execution modes.

The disclosure further concerns an apparatus for setting up a virtual meeting scene in which real participants are represented by respective avatars in real time, said device comprising:
- at least one input for receiving information on said real participants,
- at least one processor configured for adjusting geometrical properties and a positioning of at least one object of said virtual meeting scene in function of at least a number of said real participants and at least one rule regarding an arrangement of said avatars in said virtual meeting scene,
- at least one output for outputting image data and sound data for representing said virtual meeting scene and emitting corresponding sounds to said real participants.

The disclosure also relates to a computer program comprising program code instructions executable by a processor for implementing the steps of the above-defined method.

### 4. BRIEF DESCRIPTION OF THE DRAWINGS

The invention can be better understood with reference to the following description and drawings, given by way of example and not limiting the scope of protection, and in which:
- Fig.1 is a flow chart of the successive steps of a method according to an embodiment of the invention;
- Fig.2 and Fig.3 illustrate configuration examples of the virtual meeting scene according to the invention;
- Fig.4A and Fig.4B illustrate a first example of schematic views illustrating the adjustment of geometrical properties or positions of objects in a virtual meeting scene when the number of participants increases;
- Fig.5A and Fig.5B illustrate a second example of schematic views illustrating the adjustment of geometrical properties or positions of objects in a virtual meeting scene when the number of participants increases;
- Fig.6 is a schematic view of an apparatus implementing the method according to the invention.

### 5. DESCRIPTION OF EMBODIMENTS

While example embodiments are capable of various modifications and alternative forms, embodiments thereof are shown by way of example in the drawings and will herein be described in details. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Before discussing example embodiments in more details, it is noted that some example embodiments are described as processes or methods depicted as flowcharts. Although the flowcharts describe the operations as sequential processes, part of the operations may be performed in parallel, concurrently or simultaneously. In addition, the order of operations may be re-arranged. The processes may be terminated when their operations are completed, but may also have additional steps not included in the figures. The processes may correspond to methods, functions, procedures, subroutines, subprograms, etc.

Methods discussed below, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

According to the invention, it is proposed a method for setting up a virtual meeting scene in which real participants are represented by respective avatars in real time and wherein the content of the virtual meeting scene is adapted as a function of the number of real participants and additional predefined criteria or rule(s) regarding the arrangement of the avatars in the virtual meeting scene.

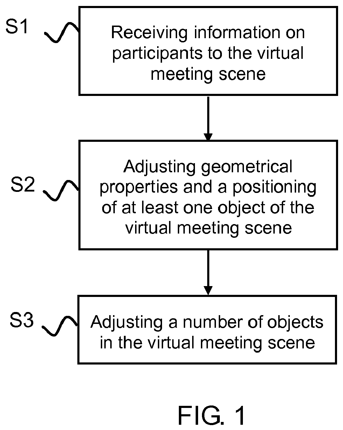

**Fig.1** is a flow chart illustrating the steps of the method according to the invention. The method comprises a step S1 for receiving information on the real participants to the meeting and a step S2 for adjusting geometrical properties and a positioning of at least one object of the virtual meeting scene in function of at least the number of real participants and at least one rule regarding an arrangement of the avatar in the virtual meeting scene.

The information received at step S1 include data about each participant to the meeting and their representation in the virtual meeting scene as well as data about the virtual meeting scene. For example, the received data comprise a virtual seating map in which every participant can be represented by an avatar around a virtual table or other objects that is generated in computer graphics. The received data may also include a user profile associated to each participant and his avatar, this user profile including for example the rank of the participant in a predetermined hierarchy.

The objects of the virtual meeting scene and the participants can be presented either in a specifically designed virtual reality headset (VR headset) or on a 2-dimensional video system that may be for example software applications like Skype or Webex. For both a VR visualization and a 2-dimensional video visualization, the avatars of the individual participants can be represented as a "fake" body with a real face captured with a webcam or it can be a completely computer-generated avatar. In the latter case, if the participant wears a VR headset device that allows to capture his face gestures (VR headset with camera observing face muscles, eyes, ...) then face rigging technologies could be used to generate a "virtual" representation of the participant that looks as close as possible to his/her real body.

Real participants are enabled to attend the meeting as if present in the virtual meeting scene, visually with respect to the virtual environment and the other participants, and preferably also for audio.

In addition, using a "virtual seating map", the audio for each meeting participant is advantageously spatialized. In particular related implementations, a surround sound technique is exploited, such as "HOA" (for Higher-Order Ambisonics) algorithms. This enables to generate an illusion for the other participants of sound originating from that position in the room, calculated individually for each other participant and according to that other participants seating position. In this way it is possible to identify who has been talking merely by the direction from which participants hear the sound originating.

According to step S2, the geometrical properties and the positioning of one or several objects of the virtual meeting scene are adjusted, before or during the meeting, in function of the number of participants and of rules regarding the arrangement of their avatars in the scene, in relation to one another. For example, if the virtual meeting scene includes tables, seats and walls, the shape and/or size of tables, the height of the seats or the spacing between the walls is adjusted.

Advantageously, the method further comprises an additional step S3 for adjusting the number of objects in the virtual meeting scene in function of the number of real participants and of said rules regarding the arrangement of the avatars in the virtual meeting scene.

The rules regarding the arrangement of the avatars in the virtual meeting scene may deal with different parameters, such as visibility or audio parameters.

In some embodiments, the real participants are able to attend at least one meeting at least visually in positions of their respective avatars in the virtual meeting scene. In these embodiments, the rules include respective visibility properties of said avatars with respect to each other or with respect to a virtual visual source.

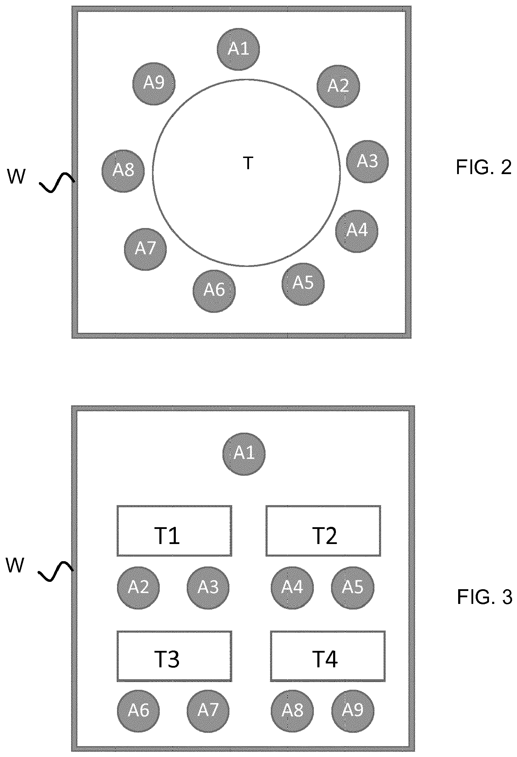

In particular embodiments, a first rule includes a visibility or non-visibility of each of said avatars by all others of said avatars. The virtual scene is adapted such that every avatar can see in an appropriate way all the other avatars. In order to meet this rule, the virtual meeting scene comprises a single table around which the avatars are disposed. The shape of the table can be circular, rectangular or oval. The size of the table is adapted to the number of participants. This case is illustrated by **Fig.2** wherein the avatars Ai (i∈ [1..9]) are placed around a circular table T in a room comprising walls W.

In particular embodiments, a second rule includes a visibility or non - visibility of each avatar by a partition of all others of the avatars, this partition being defined as a function of parameters in the user profiles associated to avatars. For example, if the avatars are ranked according to a hierarchy, the second rule may impose a visibility of each avatar by the avatars at a higher rank of the hierarchy. This case is illustrated by **Fig.3****.** The Avatar A1 has a rank higher than all other avatars A2 to A9 and the latter have the same rank in the hierarchy. In this case, the virtual meeting scene comprises four tables T1 to T4 positioned according to two rows of two tables, like in a classroom. Two avatars are positioned behind each table and the avatar A1 is placed before all the tables.

Of course, other arrangement of the tables can be used in order to meet the above mentioned visibility rules.

In a variant, the rule includes a degree of visibility (as a function of distance and opacity of air in the virtual room) of each avatar by all other avatars or a part of them.

In particular embodiments, a third rule includes a visibility of a virtual visual source by at least a partition of all avatars. This virtual visual source is for example a virtual black board or a virtual projection screen of the virtual meeting scene. In this case, the tables, the seats and the visual virtual source of the virtual meeting scene are dimensioned and positioned in order to meet said third rule.

In other embodiments, the real participants are able to attend at least one meeting at least in an auditory way in positions of their respective avatars in the virtual meeting scene. In these embodiments, the rule includes respective hearing properties of the avatars with respect to each other or with respect to a virtual visual source.

In particular embodiments, a fourth rule includes the capability of each of said avatars to hear all others of said avatars or a predetermined partition of the latter. In order to meet this rule, the virtual meeting scene comprises for example a single table around which the avatars are disposed. The shape of the table can be circular, rectangular or oval. The size of the table is adapted to the number of participants. The arrangement of Fig.2 can be used in order to fulfil this rule.

In particular embodiments, a fifth rule includes that a virtual sound source can be heard by at least a partition of all avatars. This virtual sound source is for example a virtual loudspeaker of the virtual meeting scene. In this case, the tables, the seats and the virtual loudspeaker are dimensioned and positioned in order to meet said fifth rule.

The geometry of the virtual meeting scene, such as e.g. the spacing of the walls or the size(s) of the table(s), can also be automatically adjusted based at least partly on the signal-to-noise ratio. The adjustments tend to optimize audio quality for participants. Also, those adjustments take preferably into account the positioning of the participants.

Other rules can also be applied. For example, a rule may define a maximum distance between said avatars. In a case where the virtual meeting scene includes at least two meeting places, a rule may define a maximum number of said avatars at at least one of said meeting places.

In particular embodiments, the objects forming the virtual meeting scene depend on a category of the meeting: cocktail, reception, work meeting, training meeting. For example, if the meeting is a private reception, the virtual meeting scene can be a living room in which sofa and chairs are positioned. The participants are automatically seated on the furniture when they enter the virtual venue.

The steps S1 to S3 of the inventive method can be carried out before a meeting starts and/or dynamically during a meeting.

In particulars embodiments, the step S1 comprises receiving information on the participants arriving and leaving during said meeting. The objects of the virtual meeting scene are permanently adapted to the number of participants. This adaptation comprises furniture positioning, automatic redimensioning of the room setting (walls) and adding/removing furniture.

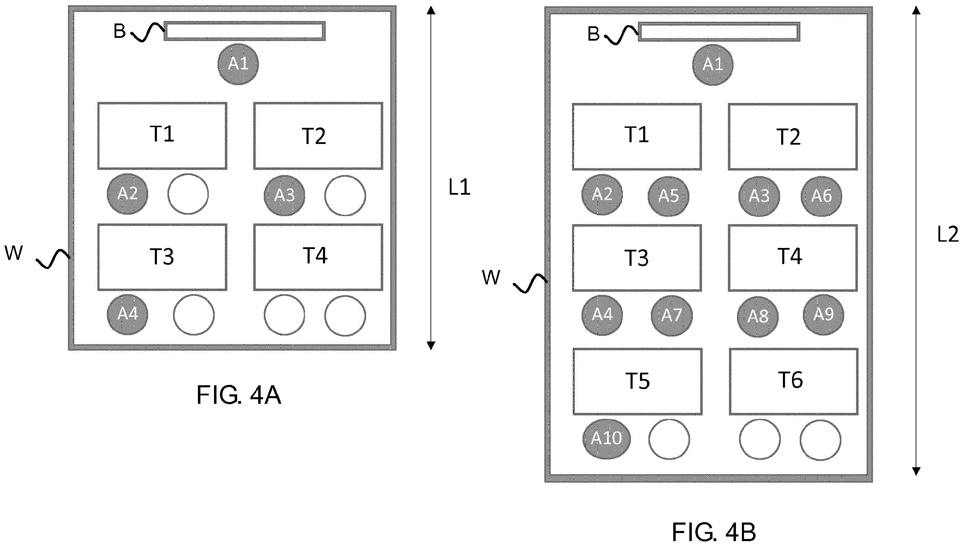

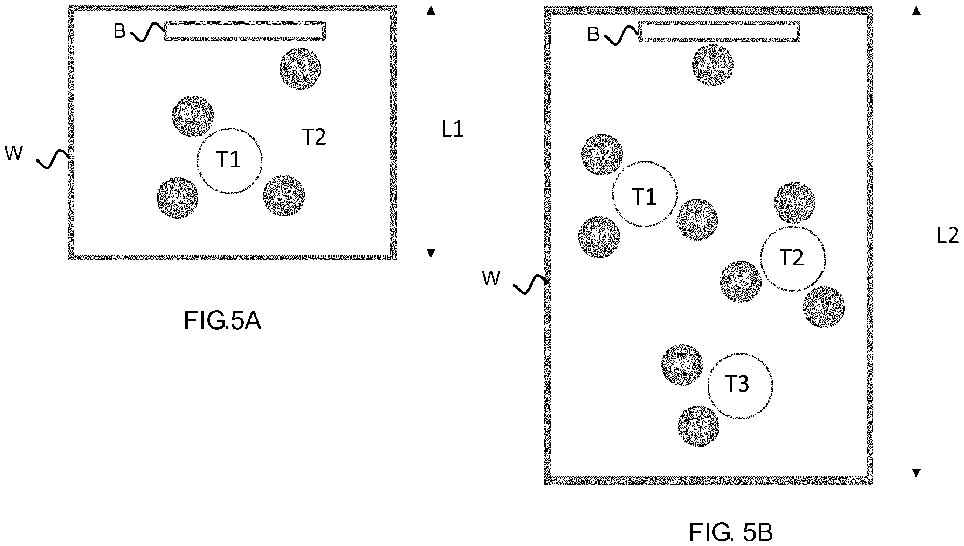

Example configurations are given on **Figs.4A-4B** and **Figs.5A-5B** in which the spacing between the walls of the virtual scene is modified, which leaves more or less overall room depending on the participants. On those representations, the configuration can switch from the left to right when the number of participants increases, and from the right to the left when it decreases.

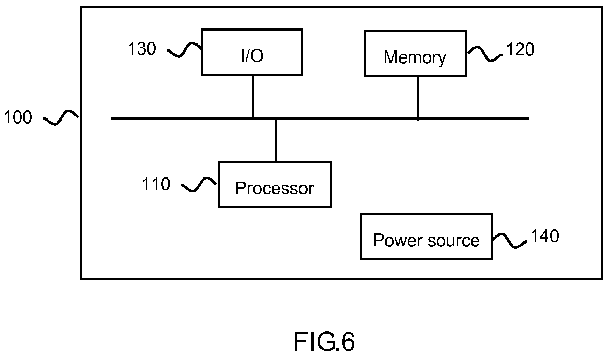

In Figs 4A-4B, a virtual classroom comprises rows of rectangular tables and a virtual blackboard B. In Fig.4A, 4 participants represented by their avatars A1-A4 are present in the scene and are seated at 4 tables T1-T4. In Fig.4B, 6 new participants represented by their avatars A5-A10 have entered the classroom. Two tables T5 and T6 have been added. The size on the room goes from L1 to L2 (with L2>L1).

In Figs 5A-5B, the virtual scene comprises scattered small round tables. In Fig.5A, a participant A1 (for example, a teacher, a boss or a trainer) is positioned near to a virtual blackboard B and 3 participants A2-A4 (students or employees) are seated around a circular table T1. In Fig.5B, 5 new participants represented by their avatars A5-A9 have entered the classroom. Two tables T2 and T3 have been added. The size on the room increases from L1 to L2.

**Fig.6** represents an exemplary architecture of an apparatus 100 configured to set up a virtual meeting scene according to any exemplary embodiment of the invention. The apparatus 100 comprises one or more processor(s) 110, which is(are), for example, a CPU, a GPU and/or a DSP (English acronym of Digital Signal Processor), along with internal memory 120 (e.g. RAM, ROM, EPROM). The apparatus 100 comprises one or several Input/Output interface(s) 130 adapted to receive input information and to display output information and/or allow an organizer to enter commands and/or data (e.g. a keyboard, a mouse, a touchpad, a webcam); and a power source 140 which may be external to the apparatus 100. The apparatus 100 may also comprise network interface(s) (not shown). The processor 110 is particularly configured to implement the adjusting steps S2 and S3.

According to an exemplary and non-limitative embodiment of the invention, the apparatus 100 further comprises a computer program stored in the memory 120. The computer program comprises instructions which, when executed by the apparatus 100, in particular by the processor 110, make the apparatus 100 carry out the method described with reference to fig.1. According to a variant, the computer program is stored externally to the apparatus 100 on a non-transitory digital data support, e.g. on an external storage medium such as a HDD, CD-ROM, DVD, a read-only and/or DVD drive and/or a DVD Read/Write drive, all known in the art. The apparatus 100 thus comprises an interface to read the computer program. Further, the apparatus 100 could access one or more Universal Serial Bus (USB)-type storage devices (e.g., "memory sticks.") through corresponding USB ports (not shown).

According to exemplary and non-limitative embodiments, the apparatus 100 is a device, which belongs to a set comprising:
- a mobile device ;
- a communication device ;
- a game device ;
- a tablet (or tablet computer) ;
- a laptop ;
- a still image camera;
- a video camera ;
- an encoding chip;
- a still image server;
- a video server (e.g. a broadcast server, a video-on-demand server or a web server) ;
- a video uploading platform; and
- a display or a decoding chip.

Hereinafter a particular execution mode is given to illustrate the preparation and the execution of a virtual meeting.

Before the virtual meeting starts, a meeting room layout is selected by the organizer. Such meeting room layout can be chosen among different settings, for example: the participants are seated around one or several tables having one or several shapes (circular, oval, rectangular); the tables are aligned by rows like in a typical school classroom or are scattered in the room; for a cocktail reception configuration, the participants are standing and can be walking/move freely in the environment.

The total number of meeting participants is not frozen prior to the meeting, so that it is possible to select just the shape of the table and to choose that the actual map will be dynamically determined and possibly expanded later while people enter the virtual room.

Information on the participants in the meeting is then received, and the reference environment of the virtual scene is adjusted accordingly. This concerns both the geometric configuration and the settings of the virtual scene, and the positioning of the participants. Preferably, those aspects are processed jointly, while taking into account both visual and audio criteria.

A conferencing server manages the seating map which is basically an X-Y-Z representation of a room around a configuration as described before. For each participant, his or her current X-Y-Z position in the room is stored as a variable.

Several possibilities existing for seating the avatars include, separately or in any possible combination:
- a predefined scheme of organizational /hierarchical structure; e.g. persons higher positioned on the corporate organization chart or having a more senior job title could be positioned in front rows, closer to the virtual camera position, or closer to the speaker;
- the order of connection: the room is filled in from left to right or right to left starting at one given position;
- predefined seating rules by the meeting organizer;
- by affinity: people with closer link/knowing each other (for example defined in their user profiles) are placed preferably next to each other, or the opposite;
- special types of participant specificities, e.g. alternate male/female participants, name alphabetical order, address...
- random positioning.

For "cocktail reception" configurations, it is possible to use "attractors" of people knowing each other to be "magnetically tied" to each other, i.e. persons coming into the meeting room will be positioned close to other persons they know.

The meeting is then started. When during that meeting session, people enter (connection) or leave the virtual room, the process above is reiterated, so that the virtual meeting scene is automatically adapted accordingly.

Advantageously, a threshold for modifying the setting of the virtual scene is defined, based on a maximum expected number of participants. This enables to reduce risks of uncomfortable changes during a meeting. For example, if it is known that 20 to 30 people are expected, the initial room size is configured for 20, so that there will be only one change in room dimensions during the meeting.

In a particular embodiment, geometric properties of the virtual scene are also modified in function of a desired virtual room temperature. Namely, too small a room with too many avatars can create a feeling of uncomfortable heat. Conversely, the meeting organizer can determine that he explicitly wants avatars in the virtual room to feel virtually hot temperature by intentionally reducing room density/size, e.g. for negotiation meetings.

It can be noted in this respect that for the real participants, the proximity of the avatars in a closed room can reflect in a feeling of underlying pressure, while the combined consideration of that proximity with respect to the dimensions of the room can be reflected in the virtual room temperature.

## Claims

1. Method for setting up a virtual meeting scene in which real participants are represented by respective avatars in real time, comprising:
- receiving (S1) information on said real participants, and
- adjusting (S2) geometrical properties and a positioning of at least one object of said virtual meeting scene in function of at least a number of said real participants and at least one rule regarding an arrangement of said avatars in said virtual meeting scene.

2. Method according to claim 1, wherein it further comprises a step (S3) of adjusting a number of said at least one object in said virtual meeting scene in function of said at least a number of said real participants and said at least one rule regarding an arrangement of said avatars in said virtual meeting scene.

3. Method according to claim 1 or 2, wherein, said real participants attending at least one meeting at least visually in positions of said respective avatars in said virtual meeting scene, said at least one rule includes respective visibility properties of said avatars with respect to each other or with respect to a virtual visual source.

4. Method according to claim 3, wherein said at least one rule includes a visibility of each of said avatars by all others of said avatars, or a visibility of each of said avatars by a partition of all others of said avatars, said partition being defined as a function of user profiles associated to said real participants.

5. Method according to claim 4, wherein said avatars being ranked according to a hierarchy, said at least one rule includes a visibility of each of said avatars being at a rank of said hierarchy by any of said avatars being at a higher rank of said hierarchy.

6. Method according to claim 1 or 2, wherein, said real participants attending at least one meeting at least in an auditory way in positions of said respective avatars in said virtual meeting scene, said at least one rule includes respective hearing properties of said avatars with respect to each other or with respect to a virtual sound source.

7. Method according to claim 6, wherein said at least one rule includes the capability of each of said avatars to hear all others of said avatars or a predetermined partition of the latter.

8. Method according to any one of claims 1 to 7, wherein said at least one rule includes a maximum distance between said avatars.

9. Method according to any one of claims 1 to 8, wherein the steps of receiving information on said real participants, adjusting the geometrical properties and the positioning of said at least one object and, where appropriate, adjusting the number of said at least one object are effected before a meeting starts.

10. Method according to any one of claims 1 to 9, wherein the steps of receiving information on said real participants, adjusting the geometrical properties and the positioning of said at least one object and, where appropriate, adjusting the number of said at least one object are dynamically effected during a meeting.

11. Method according to claim 10, wherein the step of receiving information on said real participants comprises receiving information on the participants arriving and leaving during said meeting.

12. Method according to any one of claims 1 to 11, wherein said at least one object comprises at least one table and said geometrical properties include a size or a shape of said table.

13. Method according to any one of claims 1 to 11, wherein said at least one object comprises walls and said geometrical properties include at least one spacing between said walls.

14. Method according to any one of claims 1 to 13, wherein it further comprises a step of adding or removing at least one of said at least one object in said virtual meeting scene in function of at least said number of said real participants.

15. Apparatus (100) for setting up a virtual meeting scene in which real participants are represented by respective avatars in real time, comprising:
- an input (130) for receiving information on said real participants, and
- an adjusting unit (110,120) for adjusting geometrical properties and a positioning of at least one object of said virtual meeting scene in function of at least a number of said real participants and at least one rule regarding an arrangement of said avatars in said virtual meeting scene.

16. Computer program comprising program code instructions executable by a processor for implementing the steps of a method according to at least one of claims 1 to 14.
